# EUROPÄISCHE PATENTSCHRIFT

(11) **EP 1 495 919 B1**
(45) Veröffentlichungstag und Bekanntmachung des Hinweises auf die Patenterteilung: **05.12.2007**
(21) Anmeldenummer: 04015807.3
(22) Anmeldetag: 06.07.2004
(51) Int. Cl.: B60R 21/01

(54) **Verfahren und Vorrichtung zur Abschätzung der Schwere von Unfallereignissen**
Method and Apparatus for estimating the severity of accidents
Procédé et dispositif d'estimation la gravité d'un accident

(30) Priorität: 08.07.2003 DE 10330954
(43) Veröffentlichungstag der Anmeldung: 12.01.2005
(73) Patentinhaber: DaimlerChrysler AG, 70327 Stuttgart (DE)
(72) Erfinder: Peravali, Ravindra, 89075 Ulm (DE); Dickmann, Jürgen, 89079 Ulm (DE); Mekhaiel, Moheb, 89233 Neu-Ulm (DE)

(56) Entgegenhaltungen:
- DE-A- 10 035 505
- DE-A- 19 724 101
- DE-A- 19 945 147

## Beschreibung

Die Erfindung betrifft ein Verfahren und eine Vorrichtung zur Abschätzung der Schwere von Unfallereignissen.
Eine wesentliche Rolle bei der Versorgung bzw. Rettung von Unfallopfern im Straßenverkehr kommt der zeitnahen, präzisen Information der Rettungskräfte zu.
Die Information über die Schwere eines Unfallereignisses kann hierbei beispielsweise dazu dienen, Ausrüstung und Personal eines an den Unfallort entsandten Rettungsteams an die Art des Unfallereignisses optimal anzupassen und damit eine bestmögliche Versorgung der beteiligten Personen bei gleichzeitigem optimalen Einsatz von Rettungspersonal und -material zu gewährleisten.
Dazu ist es in einem ersten Schritt notwendig, die Schwere des Unfalls abzuschätzen. Hierzu werden im Stand der Technik verschiedene Verfahren und Vorrichtungen vorgeschlagen.
So wird beispielsweise in der japanischen Patentanmeldung JP 11-348697 A, ein System vorgestellt, mit dem die Schwere eines Unfallereignisses anhand eines Beschleunigungswertes und der Richtung eines Aufpralls (vorne, seitlich oder hinten) abgeschätzt wird. In der genannten Schrift wird darüber hinaus vorgeschlagen, einen wahrscheinlichen Verletzungsgrad der Fahrzeuginsassen auf Basis gespeicherter statistischer Daten zu bestimmen.

Die dargestellte Lösung zeigt jedoch einige Nachteile. Beispielsweise hängt die Qualität der mit dem in der genannten Schrift vorgestellten System bestimmten Information in hohem Maße vom Umfang und der Qualität der vorhandenen statistischen Daten ab. Darüber hinaus wird lediglich ein einzelner Beschleunigungswert und eine grobe Richtung der Kollision (vorne, seitlich oder hinten) bestimmt.

Der vorliegenden Erfindung liegt die Aufgabe zugrunde, eine möglichst präzise Abschätzung der Schwere eines Unfallereignisses zu gewährleisten.

Diese Aufgabe wird durch das Verfahren mit den im Anspruch 1 aufgeführten Merkmalen und die Vorrichtung mit den in Anspruch 12 aufgeführten Merkmalen gelöst. Die Unteransprüche beziehen sich auf vorteilhafte Aus- und Weiterbildungen der Erfindung.

Das erfindungsgemäße Verfahren zeichnet sich unter anderem dadurch aus, das zur Abschätzung der Schwere eines Unfallereignisses Parameter zum Bewegungszustand eines Fahrzeuges während des Unfallereignisses verwendet werden, und dass dabei insbesondere der zeitliche Verlauf der Parameter zum Bewegungszustand des Fahrzeuges verwendet wird. Mit anderen Worten wird nicht nur ein singulärer Wert wie beispielsweise eine maximale Beschleunigung erfasst, sondern es werden Beschleunigungsdaten über einen längeren Zeitraum bestimmt und ausgewertet. Diese Beschleunigungsdaten können beispielsweise durch einen oder mehrere Beschleunigungssensoren erfasst werden.
Eine typische Kollision im automobilen Bereich nimmt einen Zeitraum von etwa 100 ms in Anspruch; sie besteht regelmäßig nicht nur aus einem einzigen Aufprall, sondern aus einer Serie einzelner Aufprallereignisse, die als von Beschleunigungssensoren als Beschleunigungspulse messbar sind. Beispielsweise weist ein Frontalaufprall zweier Fahrzeuge üblicherweise nicht nur einen einzigen Beschleunigungspuls auf, sondern eine Serie von derartigen Pulsen, die einerseits aus der Kollision der beteiligten Fahrzeuge, andererseits aber auch aus Aufprallereignissen der Insassen mit Teilen des Interieurs stammen.
Durch das erfindungsgemäße Verfahren wird der Verlauf der von einem Beschleunigungssensor bestimmten Beschleunigungswerte während des genannten Zeitraumes aufgenommen und ausgewertet. Es ergibt sich eine charakteristische Kurve von Beschleunigungswerten über der Zeit. Der Informationsgehalt einer solchen Kurve geht weit über den Wert der maximalen Beschleunigung hinaus. Insbesondere gestattet es die Auswertung der erhaltenen Kurve, eine Aussage über die Art und den genauen Ablauf der erfolgten Kollision zuverlässig zu treffen. So können dabei Parameter wie beispielsweise die maximale Beschleunigung, die Anzahl der relevanten Pulse, die Dauer des Aufpralls sowie die mittleren Beschleunigung bestimmt und einer weiteren Auswertung zugeführt werden. Beispielsweise ergibt sich so die Möglichkeit, zwischen dem Aufprall auf ein hartes und der Kollision mit einem weichen Hindernis zuverlässig zu unterscheiden. Die so gewonnenen Informationen lassen sich damit in vorteilhafter Weise dazu verwenden, die Schwere des betreffenden Unfallereignisses mit hinreichender Genauigkeit zu ermitteln.

Die nach dem vorstehenden Verfahren mit seinen Varianten abgeschätzte Schwere des Unfallereignisses kann in vorteilhafter Weise dazu verwendet werden, zusätzlich den wahrscheinliche Verletzungsgrad von Fahrzeuginsassen zu bestimmen. Dabei lässt sich die Korrelation zwischen der Schwere eines Unfallereignisses und dem Verletzungsgrad von Fahrzeuginsassen ausnutzen. Die mit dem vorstehend beschriebenen Verfahren erreichte hohe Qualität der Abschätzung ist hierbei ganz besonders vorteilhaft.
Zur Bestimmung des Verletzungsgrades kann beispielsweise die Abbreviated Injury Scale (AIS) verwendet werden. Hierbei handelt es sich um eine in der Fachwelt anerkannte Klassifikation von Verletzungsgraden, die auf die "Association for the Advancement of Automotive Medicine" zurückgeht. Die AIS besteht im wesentlichen aus einer sechsstufigen Skala, die von leichten bis hin zur tödlichen Verletzungen reicht.
Eine Zuordnung mechanischer Parameter wie beispielsweise Geschwindigkeitsdifferenzen oder Beschleunigungswerte zu den einzelnen Stufen der AIS kann dabei auf Basis statistischer Daten vorgenommen werden.
Somit gestattet es das vorstehend beschriebene Verfahren, in Verbindung mit der AIS aus mechanischen Parametern eines Unfallereignisses wahrscheinliche Verletzungen von Fahrzeuginsassen und deren vermutete Schwere direkt abzuleiten. Diese Informationen sind in der ersten Phase der Rettung von Unfallopfern, der sogenannten "Golden Hour" von herausragender Bedeutung.

Aus den erfassten Sensordaten können nachfolgend in vorteilhafter Weise die Dauer oder der Spitzenwert eines Beschleunigungspulses bestimmt werden. Diese beiden Parameter gestatten eine erste grobe Einschätzung des Unfallereignisses und können beispielsweise dazu verwendet werden, die zur genauen Analyse des Kollisionsverlaufs verwendeten Algorithmen auf den tatsächlich vorliegenden Kollisionsverlauf hin zu optimieren.

Die durch die Beschleunigungssensoren gelieferten Sensordaten sind darüber hinaus geeignet, eine Geschwindigkeitsdifferenz bspw. vor und nach dem Unfallereignis zu bestimmen. Dieses kann in vorteilhafter Weise dadurch erreicht werden, dass die Geschwindigkeitsdifferenz durch zeitliche Integration der Beschleunigungswerte bestimmt wird. Dabei können auch Geschwindigkeitdifferenzen für beliebige Zeitpunkte bzw. Zeiträume während des Unfallereignissen bestimmt werden. Der zur Bestimmung der Unfallschwere hilfreiche Parameter der Geschwindigkeitsdifferenz kann auf diese Weise einfach durch Auswertung der Beschleunigungsdaten ohne die Verwendung zusätzlicher Sensordaten ermittelt werden.

Besonders vorteilhaft ist es dabei, Beschleunigungswerte in unterschiedlichen Raumrichtungen zu bestimmen. Dies kann beispielsweise durch die Anordnung von Beschleunigungssensoren mit unterschiedlicher räumlicher Ausrichtung im Fahrzeug erreicht werden. Durch eine Auswertung der von diesen Sensoren gelieferten Daten zum zeitlichen Verlauf der Beschleunigung in unterschiedlichen Raumrichtungen kann nicht nur die Schwere der Kollision und ihr exakter zeitlicher Verlauf bestimmt werden, sondern auch eine exakte Aussage über die genaue Richtung der erfolgten Kollision getroffen werden.
Hierdurch ergibt sich die Möglichkeit, nicht nur eine grobe Unterscheidung zwischen einem Aufprall von vorne, hinten oder der Seite zu treffen, sondern die genaue Richtung der Kollision zu bestimmen. Durch diese Variante der Erfindung wird es möglich, auch schräge Kollisionen zuverlässig zu detektieren und die Abschätzung der Schwere des Unfallereignisses weiter zu präzisieren.
Es hat sich dabei bewährt, die Sensoren in drei orthogonalen Raumrichtungen im Fahrzeug anzuordnen. Durch diese Maßnahme wird die Genauigkeit der Bestimmung der Richtung der Kollision wesentlich erhöht.

Die Bestimmung der Schwere des Unfallereignisses kann insbesondere dadurch präzisiert werden, dass Sensordaten mindestens eines zusätzlichen Sensors verwendet werden. Durch diese Maßnahme wird die Möglichkeit geschaffen, anhand einer Datenfusion, also einer kombinierten Auswertung von Daten unterschiedlicher Sensoren, eine weitere Verbesserung der Qualität der Abschätzung der Schwere des Unfallereignisses zu erreichen. Besonders vorteilhaft ist es hierbei, als zusätzliche Sensoren Überrollsensoren, Gurtsensoren oder Geschwindigkeitssensoren zu verwenden.
Dabei kann als Überrollsensor beispielsweise ein Gyroskop verwendet werden. Die Information darüber, dass das Unfallereignis mit einem Überschlag des betreffenden Fahrzeuges verbunden war, leistet einen wichtigen Beitrag zur Bestimmung der Schwere des Unfallereignisses. Insbesondere bei Cabriolets und Roadstern ist dieser Information eine erhöhte Bedeutung beizumessen, da ein Überschlag eines derartigen Fahrzeuges typischerweise erhöhten Verletzungsrisiken für die Fahrzeuginsassen verbunden ist.
Besonders vorteilhaft ist es dabei, die in diesen Fahrzeugen zur Auslösung eines versenkbaren Überrollbügels bereits vorhandenen Sensoren zu verwenden.
In ähnlicher Weise können die Gurtsensoren Daten für eine nachfolgende Auswertung liefern. Dabei hat es sich bewährt, Informationen über die Zugbelastung der Gurte während des Unfallereignisses auszuwerten. Aus diesen Informationen kann beispielsweise darauf geschlossen werden, welchen Belastungen der Thorax eines Fahrzeuginsassen während einer Kollision ausgesetzt war.
Zusätzlich können zur Bestimmung der Schwere des Unfallereignisses Geschwindigkeitsdaten herangezogen werden. Insbesondere die Geschwindigkeit des Fahrzeuges kurz vor der Kollision stellt eine wesentliche Information zur Abschätzung des Ausmaßes eines Unfallereignisses dar. Eine mit geringem Aufwand realisierbare Variante zur Bestimmung der Geschwindigkeit des Fahrzeuges vor der Kollision besteht darin, die durch den Tachometer ohnehin gemessenen Geschwindigkeitswerte zu verwenden.

Dabei ist es besonders vorteilhaft, dass Informationen zur Schwere des Unfallereignisses nach dem Unfallereignis an eine Zentrale wie z. B. eine Rettungszentrale übertragen werden. Zur Übertragung der Informationen kann beispielsweise ein e-xistierendes Rettungsystem wie das für Fahrzeuge der Marke Mercedes-Benz verfügbare System "TeleAid" verwendet werden. Auf Basis der übertragenen Informationen kann dann in der Rettungszentrale sowohl die personelle als auch die instrumentelle Ausstattung eines Rettungsteams auf das vorliegende Unfallereignis hin optimiert werden und eine bestmögliche Versorgung von Unfallopfern unmittelbar nach dem Unfallereignis gewährleistet werden. Hierdurch wird es möglich, langwierig zu therapierende Folgeschäden wirksam zu vermeiden.

Weiterhin besteht eine zusätzliche Maßnahme zur Abschätzung der Schwere des Unfallereignisses darin, Informationen über Beschädigungen des Fahrzeuges zu verwenden. Dabei können die ohnehin im Fahrzeug vorhandenen Diagnosesysteme vorteilhaft verwendet werden. Beispielsweise kann aus dem Austritt von Kühlflüssigkeit oder Motoröl, der anhand eines Druckabfalls im zugehörigen Teilsystem leicht durch das Diagnosesystem ermittelt werden kann, auf massive Beschädigungen des vorderen Fahrzeugteils geschlossen werden. Die Verwendung der so gewonnenen Informationen in einer nachfolgenden Datenfusion leistet einen weiteren Beitrag zur Präzisierung des Ergebnisses der Abschätzung.

Die medizinische Versorgung der Fahrzeuginsassen nach einem Unfallereignis kann weiterhin dadurch optimiert werden, dass den alarmierten Rettungskräften medizinische Daten zu den Fahrzeuginsassen nach dem Unfallereignis zur Verfügung gestellt werden.Es hat sich dabei beispielsweise bewährt, Informationen zu möglichen Allergien, Blutgruppen bzw. anatomischen Besonderheiten von Fahrzeuginsassen bereits bei der Übertragung der Informationen zu dem Unfallereignis an die Rettungszentrale zu übermitteln. Dies gestattet, die nachfolgende medizinische Versorgung von Unfallopfern personenbezogen zu optimieren.

Eine Vorrichtung, die geeignet ist, das erfindungsgemäße Verfahren zu realisieren, zeigt mindestens einen Sensor zur Bestimmung von Parametern zum Bewegungszustand eines Fahrzeuges sowie eine Auswerteeinheit. Dabei weist die Auswerteeinheit Mittel auf, die Schwere des Unfallereignisses aus dem zeitlichen Verlauf der Parameter zum Bewegungszustand des Fahrzeuges zu bestimmen. Der Sensor kann dabei beispielsweise als Geschwindigkeits- oder Beschleunigungssensor ausgebildet sein. Die Auswerteeinheit der erfindungsgemäßen Vorrichtung kann insbesondere einen Signalverarbeitungsprozessor sowie einen Pufferspeicher zeigen. Die durch den oder die Sensoren bestimmten Parameter zum Bewegungszustand werden dabei im Pufferspeicher zwischengespeichert und anschließend in der Auswerteeinheit weiterverarbeitet.

Es hat sich hierbei besonders bewährt, die Auswerteeinheit so auszubilden, dass sie geeignet ist die Dauer und/oder den Spitzenwert eines Beschleunigungspulses zu bestimmen. In ähnlicher Weise ist es von Vorteil, die Auswerteeinheit daraufhin zu optimieren, dass sie eine Bestimmung von Geschwindigkeitsdifferenzen beispielsweise zur beliebigen Zeitpunkten während des Unfallereignisses oder auch vor und nach dem Unfallereignis erlaubt. Dies kann in vorteilhafter Weise dadurch erreicht werden, dass die Auswerteeinheit eine Integrationseinheit aufweist, mit der eine schnelle Integration von gemessenen Beschleunigungswerten und damit eine einfache Bestimmung von Geschwindigkeitsdifferenzen möglich ist.

In einer weiteren vorteilhaften Ausgestaltung der Erfindung werden mehrere Beschleunigungssensoren im Fahrzeug in unterschiedlichen Raumrichtungen angeordnet. Beispielsweise kann durch einen Beschleunigungssensor die Beschleunigung in Fahrtrichtung, durch einen anderen Sensor die seitliche Beschleunigung und durch einen weiteren Sensor die Vertikalbeschleunigung bestimmt werden. In Kombination mit einer derartigen Anordnung von Sensoren kann die Auswerteeinheit so ausgelegt werden, dass sie geeignet ist, die genaue Richtung einer Kollision aus den durch die Sensoren bestimmten Beschleunigungswerten zu ermitteln.

Eine weitere vorteilhafte Variante der Erfindung besteht darin, mindestens einen zusätzlichen Sensor vorzusehen. Dabei kann es sich zum Beispiel um einen Überrollsensor, Gurtsensor oder einen Geschwindigkeitssensoren handeln. Die von dem oder den zusätzlichen Sensoren bestimmten Parameter können dabei in vorteilhafter Weise dazu verwendet werden, die Präzision der Bestimmung der Schwere des Unfallereignisses weiter zu erhöhen.

Die erfindungsgemäße Vorrichtung lässt sich dahingehend erweitern, dass die Auswerteeinheit geeignet ist, aus der abgeschätzten Schwere des Unfallereignisses den wahrscheinlichen Verletzungsgrad der Fahrzeuginsassen zu bestimmen. Hierzu zeigte die Auswerteeinheit beispielsweise eine Datenbank, in der verschiedenen Schweregraden von Unfallereignissen entsprechend abgestufte mögliche Verletzungen zugeordnet sind. Zur Klassifikation der möglichen Verletzungen bietet es sich dabei an, die bereits vorne beschriebene AIS zu verwenden.

Um eine möglichst effiziente Rettung von Unfallopfern zu gewährleisten, ist es von Vorteil, zusätzlich Mittel vorzusehen, mit denen die durch die erfindungsgemäße Vorrichtung gewonnenen Informationen zeitnah beispielsweise an eine Rettungszentrale übertragen werden können. Dies kann in einfacher Weise durch ein in vielen Fahrzeugen ohnehin vorhandenes Mobiltelefon erreicht werden, dass eine entsprechende Kurznachricht nach einem durch die erfindungsgemäße Vorrichtung erkannten Unfallereignis übermittelt.

Darüber hinaus hat es sich bewährt, medizinische Informationen zu den Fahrzeuginsassen in einer Speichereinheit zu hinterlegen und im Falle eines Unfalles an die Rettungszentrale zu übermitteln bzw. den Rettungskräften zur Verfügung zu stellen. Dabei muss sich die Speichereinheit nicht zwingend im Fahrzeug befinden. Es ist beispielsweise vorteilhaft, bereits vorhandene Patientendaten in der Datenbank eines Krankenhauses zu verwenden. Somit genügt es, lediglich die Identität des an dem Unfallereignis beteiligten Fahrzeuginsassen zu übermitteln. Die zugehörigen medizinischen Daten können nachfolgend aus der oben genannten Datenbank gewonnen werden, so dass sich eine datenbanktechnisch ungünstige und aus Datenschutzgründen bedenkliche Speicherung sensibler, identischer Daten an zwei unterschiedlichen Speicherorten erübrigt. Die Identität der Fahrzeuginsassen kann dabei in vorteilhafter Weise beispielsweise unter Verwendung eines auf der Erfassung biometrischer Daten beruhenden Fahrberechtigungssystems gewonnen werden.

Eine Möglichkeit, das erfindungsgemäße Verfahren mit der oben beschriebenen Vorrichtung anzuwenden, wird im Folgenden beispielhaft erläutert:
In einem ersten Schritt wird entschieden, ob das erfindungsgemäße Verfahren gestartet werden soll. Hierzu werden aufeinanderfolgende Beschleunigungswerte ausgewertet und ermittelt, ob für eine aufeinanderfolgende bestimmte Anzahl von Werten eine Beschleunigung von 2g überschritten wird. In diesem Fall wird angenommen, dass die Fahrzeugdynamik hinreichend starken Änderungen unterliegt, die auf ein Unfallereignis schließen lassen, und das Verfahren wird gestartet.

Nachfolgend werden die von den Beschleunigungssensoren gemessenen Werte zwischengespeichert, um für eine anschließende Auswertung zur Verfügung zu stehen. Die Datenerfassung wird gestoppt, wenn die gemessenen Beschleunigungswerte über einen bestimmten Zeitraum 1g nicht überschreiten.

In einem weiteren Schritt werden die Beschleunigungswerte numerisch integriert, um eine Abschätzung für die Geschwindigkeitsdifferenz zu erhalten. Dabei stellt die Geschwindigkeitsdifferenz beispielsweise den Unterschied der Geschwindigkeiten unmittelbar vor dem Aufprall und danach dar. Sie kann nachfolgend in Kombination mit den Eigenschaften der Beschleunigungspulse zur Abschätzung der Schwere des Unfallereignisses verwendet werden.

Parallel hierzu werden die Beschleunigungswerte ausgewertet, um die Eigenschaften der Beschleunigungspulse, die während des Unfallereignisses gemessen wurden, zu bestimmen. Insbesondere werden aus den Beschleunigungswerten die Spitzenbeschleunigung und die Dauer der Kollision bestimmt.

Ferner wird aus den Beschleunigungswerten der in unterschiedlichen Raumrichtungen angeordneten Sensoren durch das Verfahren die Kollisionsrichtung ermittelt. Dies kann beispielsweise dadurch erfolgen, dass die Geschwindigkeitsdifferenzen entlang der unterschiedlichen Raumrichtungen ausgewertet werden.

Schließlich werden die durch das Verfahren ermittelten Ergebnisse dazu verwendet, den möglichen Verletzungsgrad der Fahrzeuginsassen zu bestimmen. Dabei kann zur Klassifikation der Verletzungen in vorteilhafter Weise die AIS verwendet werden. Die so gewonnenen Informationen können nachfolgend beispielsweise mittels einer Mobilfunkverbindung an eine Rettungszentrale übertragen werden und eine auf Basis dieser Informationen optimierte Rettungsmaßnahme kann eingeleitet werden.

## Patentansprüche

1. Verfahren zur Abschätzung der Schwere eines Unfallereignisses unter Verwendung von Parametern zum Bewegungszustand eines Fahrzeuges während des Unfallereignisses, wobei zur Abschätzung der Schwere des Unfallereignisses der zeitliche Verlauf der Parameter zum Bewegungszustand des Fahrzeuges verwendet wird,
**dadurch gekennzeichnet,**
**dass** aus der abgeschätzten Schwere des Unfallereignisses zusätzlich der wahrscheinliche Verletzungsgrad von Fahrzeuginsassen bestimmt wird.

2. Verfahren zur Abschätzung der Schwere eines Unfallereignisses nach Anspruch 1,
**dadurch gekennzeichnet,**
**dass** es sich bei den Parametern zum Bewegungszustand um Beschleunigungswerte handelt.

3. Verfahren zur Abschätzung der Schwere eines Unfallereignisses nach einem der vorangehenden Ansprüche 1 oder 2,
**dadurch gekennzeichnet,**
**dass** das Verfahren geeignet ist, die Dauer oder den Spitzenwert eines Beschleunigungspulses zu bestimmen.

4. Verfahren zur Abschätzung der Schwere eines Unfallereignisses nach einem der vorangehenden Ansprüche,
**dadurch gekennzeichnet,**
**dass** aus ermittelten Sensordaten eine Geschwindigkeitsdifferenz bestimmt wird.

5. Verfahren zur Abschätzung der Schwere eines Unfallereignisses nach Anspruch 4,
**dadurch gekennzeichnet,**
**dass** die Geschwindigkeitsdifferenz durch zeitliche Integration der Beschleunigungswerte bestimmt wird.

6. Verfahren zur Abschätzung der Schwere eines Unfallereignisses nach einem der vorangehenden Ansprüche,
**dadurch gekennzeichnet,**
**dass** die Parameter zum Bewegungszustand des Fahrzeuges in unterschiedlichen Raumrichtungen erfasst werden.

7. Verfahren zur Abschätzung der Schwere eines Unfallereignisses nach Anspruch 6,
**dadurch gekennzeichnet,**
**dass** aus den gemessenen Parametern die Raumrichtung, in der eine Kollision erfolgte, bestimmt wird.

8. Verfahren zur Abschätzung der Schwere eines Unfallereignisses nach einem der vorangehenden Ansprüche,
**dadurch gekennzeichnet,**
**dass** zur Abschätzung der Schwere des Unfallereignisses Sensordaten mindestens eines zusätzlichen Sensors, insbesondere eines Überrollsensors, Gurtsensors oder eines Geschwindigkeitssensors verwendet werden.

9. Verfahren nach einem der vorangehenden Ansprüche,
**dadurch gekennzeichnet,**
**dass** die Informationen zur Schwere des Unfallereignisses nach dem Unfallereignis an eine Zentrale übertragen werden.

10. Verfahren zur Abschätzung der Schwere eines Unfallereignisses nach einem der vorangegangenen Ansprüche
**dadurch gekennzeichnet,**
**dass** zur Abschätzung der Schwere des Unfallereignisses Informationen über Beschädigungen des Fahrzeuges verwendet werden.

11. Verfahren nach einem der vorangehenden Ansprüche,
**dadurch gekennzeichnet,**
**dass** Rettungskräften medizinische Daten zu den Fahrzeuginsassen nach dem Unfallereignis zur Verfügung gestellt werden.

12. Vorrichtung zur Abschätzung der Schwere eines Unfallereignisses mit mindestens einem Sensor zur Bestimmung von Parametern zum Bewegungszustand eines Fahrzeuges während des Unfallereignisses sowie einer Auswerteeinheit, wobei die Auswerteeinheit Mittel aufweist, die Schwere des Unfallereignisses aus dem zeitlichen Verlauf der Parameter zum Bewegungszustand des Fahrzeuges zu bestimmen,
**dadurch gekennzeichnet,**
**dass** die Auswerteeinheit geeignet ist, aus der abgeschätzten Schwere des Unfallereignisses zusätzlich den wahrscheinlichen Verletzungsgrad von Fahrzeuginsassen zu bestimmen.

13. Vorrichtung zur Abschätzung der Schwere eines Unfallereignisses nach Anspruch 12,
**dadurch gekennzeichnet,**
**dass** der Sensor als Beschleunigungssensor ausgebildet ist.

14. Vorrichtung zur Abschätzung der Schwere eines Unfallereignisses nach Anspruch 13,
**dadurch gekennzeichnet,**
**dass** die Auswerteeinheit geeignet ausgebildet ist, die Dauer und/oder den Spitzenwert eines Beschleunigungspulses zu bestimmen.

15. Vorrichtung zur Abschätzung der Schwere eines Unfallereignisses nach einem der vorangehenden Ansprüche 12-14,
**dadurch gekennzeichnet,**
**dass** die Auswerteeinheit geeignet ausgebildet ist, aus den ermittelten Sensordaten Geschwindigkeitsdifferenzen zu bestimmen.

16. Vorrichtung zur Abschätzung der Schwere eines Unfallereignisses nach einem der vorangehenden Ansprüche 12-15,
**dadurch gekennzeichnet,**
**dass** die Auswerteeinheit Mittel aufweist, die Geschwindigkeitsdifferenzen durch zeitliche Integration der Beschleunigungswerte zu bestimmen.

17. Vorrichtung zur Abschätzung der Schwere eines Unfallereignisses nach einem der vorangehenden Ansprüche 12-16,
**dadurch gekennzeichnet,**
**dass** der Sensor oder die Sensoren geeignet ausgebildet ist/sind, die Parameter zum Bewegungszustand des Fahrzeuges in unterschiedlichen Raumrichtungen zu erfassen.

18. Vorrichtung zur Abschätzung der Schwere eines Unfallereignisses nach Anspruch 17,
**dadurch gekennzeichnet,**
**dass** die Auswerteeinheit geeignet ist, aus den gemessenen Parametern die Raumrichtung, in der eine Kollision erfolgte, zu bestimmen.

19. Vorrichtung zur Abschätzung der Schwere eines Unfallereignisses nach einem der vorangehenden Ansprüche 12-18,
**dadurch gekennzeichnet,**
**dass** mindestens ein zusätzlicher Sensor, insbesondere ein Überrollsensor, Gurtsensor oder ein Geschwindigkeitssensor vorhanden ist.

20. Vorrichtung nach einem der vorangehenden Ansprüche 12-19,
**dadurch gekennzeichnet,**
**dass** zusätzlich eine Übertragungseinheit vorhanden ist, die geeignet ist, Informationen zur Schwere des Unfallereignisses nach dem Unfallereignis an eine Zentrale zu übertragen.

21. Vorrichtung nach einem der vorangehenden Ansprüche 12-20,
**dadurch gekennzeichnet,**
**dass** zusätzlich eine Speichereinheit mit medizinischen Daten zu den Fahrzeuginsassen vorgesehen ist und die medizinischen Daten Rettungskräften nach dem Unfallereignis zur Verfügung gestellt werden.

## Claims

1. Method for estimation of the severity of an accident event using parameters relating to the motion state of a vehicle during the accident event, with the time profile of the parameters relating to the motion state of the vehicle being used to estimate the severity of the accident event,
**characterized in that**
the probable degree of injury of vehicle occupants is additionally determined from the estimated severity of the accident event.

2. Method for estimation of the severity of an accident event according to Claim 1,
**characterized in that**
the parameters relating to the motion state are acceleration values.

3. Method for estimation of the severity of an accident event according to one of the preceding Claims 1 or 2,
**characterized in that**
the method is suitable for determination of the duration or the peak value of an acceleration pulse.

4. Method for estimation of the severity of an accident event according to one of the preceding claims,
**characterized in that**
a speed difference is determined from the determined sensor data.

5. Method for estimation of the severity of an accident event according to Claim 4,
**characterized in that**
the speed difference is determined by integration of the acceleration values with respect to time.

6. Method for estimation of the severity of an accident event according to one of the preceding claims,
**characterized in that**
the parameters relating to the motion state of the vehicle are recorded in different spatial directions.

7. Method for estimation of the severity of an accident event according to Claim 6,
**characterized in that**
the spatial direction in which a collision occurred is determined from the measured parameters.

8. Method for estimation of the severity of an accident event according to one of the preceding claims,
**characterized in that**
sensor data from at least one additional sensor, in particular a roll-over sensor, belt sensor or a speed sensor, is used to estimate the severity of the accident event.

9. Method according to one of the preceding claims,
**characterized in that**
the information relating to the severity of the accident event is transmitted to a control centre, after the accident event.

10. Method for estimation of the severity of an accident event according to one of the preceding claims,
**characterized in that**
information relating to damage to the vehicle is used to estimate the severity of the accident event.

11. Method according to one of the preceding claims, **characterized in that** medical data relating to the vehicle occupants is made available to the rescue services, after the accident event.

12. Apparatus for estimation of the severity of an accident event having at least one sensor for determination of parameters relating to the motion state of a vehicle during the accident event, and an evaluation unit, with the evaluation unit having means to determine the severity of the accident event from the time profile of the parameters relating to the motion state of the vehicle,
**characterized in that**
the evaluation unit is suitable for additionally determining the probable degree of injury to vehicle occupants from the estimated severity of the accident event.

13. Apparatus for estimation of the severity of an accident event according to Claim 12,
**characterized in that**
the sensor is an acceleration sensor.

14. Apparatus for estimation of the severity of an accident event according to Claim 13,
**characterized in that**
the evaluation unit is suitable for determination of the duration and/or the peak value of an acceleration pulse.

15. Apparatus for estimation of the severity of an accident event according to one of the preceding Claims 12 to 14,
**characterized in that**
the evaluation unit is suitable for determination of speed differences from the determined sensor data.

16. Apparatus for estimation of the severity of an accident event according to one of the preceding Claims 12 to 15,
**characterized in that**
the evaluation unit has means for determination of the speed differences by integration of the acceleration values with respect to time.

17. Apparatus for estimation of the severity of an accident event according to one of the preceding Claims 12 to 16,
**characterized in that**
the sensor or the sensors is or are designed to record the parameters relating to the motion state of the vehicle in different spatial directions.

18. Apparatus for estimation of the severity of an accident event according to Claim 17,
**characterized in that**
the evaluation unit is suitable for determination of the spatial direction in which a collision occurred from the measured parameters.

19. Apparatus for estimation of the severity of an accident event according to one of the preceding Claims 12 to 18,
**characterized in that**
at least one additional sensor, in particular a roll-over sensor, belt sensor or a speed sensor, is provided.

20. Apparatus according to one of the preceding Claims 12 to 19,
**characterized in that**
a transmission unit is additionally provided and is suitable for transmission of information relating to the severity of the accident event to a control centre, after the accident event.

21. Apparatus according to one of the preceding Claims 12 to 20,
**characterized in that**
a memory unit having medical data relating to the vehicle occupants is additionally provided, and the medical data is made available to the rescue services after the accident event.

## Revendications

1. Procédé pour estimer la gravité d'un accident en utilisant des paramètres relatifs à la situation de mouvement d'un véhicule pendant l'accident, l'évolution dans le temps des paramètres relatifs à la situation de mouvement du véhicule étant utilisée pour estimer la gravité de l'accident, **caractérisé en ce que** le degré de lésion probable d'occupants du véhicule est en plus déterminé à partir de la gravité estimée de l'accident.

2. Procédé pour estimer la gravité d'un accident selon la revendication 1, **caractérisé en ce** les paramètres relatifs à la situation de mouvement concernent des valeurs d'accélération.

3. Procédé pour estimer la gravité d'un accident selon l'une des revendications précédentes 1 ou 2, **caractérisé en ce que** le procédé convient pour déterminer la durée ou la valeur de crête d'une impulsion d'accélération.

4. Procédé pour estimer la gravité d'un accident selon l'une quelconque des revendications précédentes, **caractérisé en ce qu'**une différence de vitesse est déterminée à partir de données de capteurs déterminées.

5. Procédé pour estimer la gravité d'un accident selon la revendication 4, **caractérisé en ce que** la différence de vitesse est déterminée par intégration dans le temps des valeurs d'accélération.

6. Procédé pour estimer la gravité d'un accident selon l'une quelconque des revendications précédentes, **caractérisé en ce que** les paramètres relatifs à la situation de mouvement du véhicule sont' détectés dans différentes directions spatiales.

7. Procédé pour estimer la gravité d'un accident selon la revendication 6, **caractérisé en ce que** la direction spatiale dans laquelle une collision s'est produite est déterminée à partir des paramètres mesurés.

8. Procédé pour estimer la gravité d'un accident selon l'une quelconque des revendications précédentes, **caractérisé en ce que** des données de capteurs d'au moins un capteur supplémentaire, en particulier un capteur de retournement, un capteur de ceinture de sécurité ou un capteur de vitesse, sont utilisées pour estimer la gravité de l'accident.

9. Procédé selon l'une quelconque des revendications précédentes, **caractérisé en ce que** les informations relatives à la gravité de l'accident sont transmises à une centrale après l'accident.

10. Procédé pour estimer la gravité d'un accident selon l'une quelconque des revendications précédentes, **caractérisé en ce que** des informations concernant des dommages au véhicule sont utilisées pour estimer la gravité de l'accident.

11. Procédé selon l'une quelconque des revendications précédentes, **caractérisé en ce que** des données médicales relatives aux occupants du véhicule sont mises à la disposition d'équipes de secours après l'accident.

12. Dispositif pour estimer la gravité d'un accident, comportant au moins un capteur pour déterminer des paramètres relatifs à la situation de mouvement d'un véhicule pendant l'accident ainsi qu'une unité d'évaluation, l'unité d'évaluation présentant des moyens pour déterminer la gravité de l'accident à partir de l'évolution dans le temps des paramètres relatifs à la situation de mouvement du véhicule, **caractérisé en ce que** l'unité d'évaluation convient pour déterminer en plus le degré de lésion probable d'occupants du véhicule à partir de la gravité estimée de l'accident.

13. Dispositif pour estimer la gravité d'un accident selon la revendication 12, **caractérisé en ce que** le capteur est conformé en tant que capteur d'accélération.

14. Dispositif pour estimer la gravité d'un accident selon la revendication 13, **caractérisé en ce que** l'unité d'évaluation est utilement conformée pour déterminer la durée et/ou la valeur de crête d'une impulsion d'accélération.

15. Dispositif pour estimer la gravité d'un accident selon l'une quelconque des revendications précédentes 12-14, **caractérisé en ce que** l'unité d'évaluation est utilement conformée pour déterminer des différences de vitesse à partir de données de capteurs déterminées.

16. Dispositif pour estimer la gravité d'un accident selon l'une quelconque des revendications précédentes 12-15, **caractérisé en ce que** l'unité d'évaluation présente des moyens pour déterminer des différences de vitesse par intégration dans le temps des valeurs d'accélération.

17. Dispositif pour estimer la gravité d'un accident selon l'une quelconque des revendications précédentes 12-16, **caractérisé en ce que** le capteur ou les capteurs est/sont utilement conformé(s) pour détecter dans différentes directions spatiales les paramètres relatifs à la situation de mouvement du véhicule.

18. Dispositif pour estimer la gravité d'un accident selon la revendication 17, **caractérisé en ce que** l'unité d'évaluation convient pour déterminer à partir des paramètres mesurés la direction spatiale dans laquelle une collision s'est produite.

19. Dispositif pour estimer la gravité d'un accident selon l'une quelconque des revendications précédentes 12-18, **caractérisé en ce qu'**au moins un capteur supplémentaire, en particulier un capteur de retournement, un capteur de ceinture de sécurité ou un capteur de vitesse, est prévu.

20. Dispositif selon l'une quelconque des revendications précédentes 12-19, **caractérisé en ce qu'**une unité de transmission est en plus prévue, laquelle convient pour transmettre des informations relatives à la gravité de l'accident à une centrale après l'accident.

21. Dispositif selon l'une quelconque des revendications précédentes 12-20, **caractérisé en ce qu'**une unité de mémoire avec des données médicales relatives aux occupants du véhicule est en plus prévue et **en ce que** les données médicales sont mises à la disposition d'équipes de secours après l'accident.
